# EUROPEAN PATENT APPLICATION

(11) **EP 4 418 222 A1**
(43) Date of publication of application: **21.08.2024**
(21) Application number: 23186944.7
(22) Date of filing: 21.07.2023
(51) Int. Cl.: G07C 9/00, H04W 52/02

(54) **WAKEUP-SIGNAL FORWARDING METHOD FOR ACCESS ENFORCEMENT POINT(S) AND ACCESS CONTROL SYSTEMS**

(30) Priority: 20.02.2023 EP 23157529; 04.04.2023 EP 23166638; 04.04.2023 EP 23166637
(71) Applicant: dormakaba Schweiz AG, 8623 Wetzikon (CH)
(72) Inventor: MELI, Louis Marcel, 8700 Kuesnacht (CH); DUETSCHLER, Urs, 8620 Wetzikon (CH); MAIJ, Benjamin Jonathan, 8274 Tägerwilem (CH)
(74) Representative: Balder IP Law, S.L.

(57) **Abstract**

According to a first aspect of the present invention, a computer-implemented wakeup-signal forwarding method for access control is provided, which may be performed by at least a first access enforcement point. The first access enforcement point may be operable in a low-power mode. The first access enforcement point may be operable in in an active mode. The first access enforcement point may be configured to cause operation of a first access point. The first access enforcement point being in the low-power mode may be configured to operate at a lower power consumption as compared to a power consumption of the first access enforcement point being in the active mode. The first access enforcement point may comprise a wakeup receiver configured to receive a wakeup signal. The first access enforcement point may comprise a wakeup transmitter configured to send a wakeup signal. The first access enforcement point may comprise an instruction receiver configured to receive an instruction signal. In the low-power mode of the first access enforcement point, the instruction receiver may be inactive. In the active mode of the first access enforcement point, the instruction receiver may be active. The method may comprise receiving by the wakeup receiver of the first access enforcement point being in the low-power mode, a first wakeup signal. The method may comprise determining whether the first wakeup signal is designated to cause switching of the first access enforcement point into the active mode. The method may comprise, if the first wakeup signal is determined to not being designated to cause switching of the first access enforcement point into the active mode, sending, using the wakeup transmitter, a second wakeup signal. The second wakeup signal may preferably correspond to the first wakeup signal.

## Description

### FIELD OF THE INVENTION

The present invention relates to a wakeup-signal forwarding method for an access enforcement point and to a wakeup-signal forwarding method for an access control system, in particular to energy-efficient methods. Further, the present invention relates to an access enforcement point and to an access control system. Further, the present invention relates to corresponding computer programs.

### BACKGROUND OF THE INVENTION

Entry systems have become widely used in applications in particular for access control in building facilities. Access control relates to granting, denying or limiting access to particular section(s) of a controlled area, usually by means of some level of access control by use of a barrier, such as a door, turnstile, parking gate, elevator door, or other barrier.

Various prior art systems are known for access control based on various principles using corresponding technologies. According to a first known approach, referred to as "who you are", access control is aimed to be achieved by identifying the individuals themselves, implemented using biometric identification technologies. One particular biometric identification technology used for people flow control uses face recognition to identify individuals. While face recognition technology has its merits, it is prone to error and is therefore often unreliable. Furthermore, face recognition technology has proven to be greatly affected by face covering, being for cultural and/or hygienic reasons. Further, face recognition is based on at least one camera which is always active which is not energy efficient. Alternative particular biometric identification technology used for access flow control uses fingerprint to identify individuals. Such is however disadvantageous as fingerprint recognition is often unreliable (slow, affected by the dryness of one's skin) and is particularly disadvantageous as it requires contact with a frequently used surface (the fingerprint reader).

According to a further known approach, referred to as "what you have", access control is based on identifying individuals using something the user possesses, referred to as a token or authentication medium. Particularly advantageous are keyless entry systems due to their convenience and/or reliability. Keyless entry systems may for example operate in that an BLE (Bluetooth Low Energy) or UWB (Ultra-Wideband) access control terminal executes a wireless communication with an authentication device, such as a keyless fob, a keycard or an authentication medium incorporating a corresponding wireless transceiver. Once said wireless communication between the access control terminal and the authentication medium has been executed, the access control terminal exchanges data messages with the authentication medium. The authentication can be initiated either by a user, for instance by pressing a button on the authentication medium to trigger transmission of authentication data to the access control terminal. Upon successful authentication, i.e. verification of user credentials (e.g. by correlating authentication data received from the authentication device with a list of authorized users), the access control terminal grants access to the user in possession of the respective authentication medium, e.g. by opening said barrier. On the other hand, if the authentication fails, the access control terminal denies access to the user in possession of the respective authentication medium, e.g. by locking the barrier/ by keeping the barrier locked.

For close-range applications, a radio-frequency identification (RFID) transponder (or tag) is often used, which has mostly replaced earlier magnetic stripe cards. Other current solutions use infra-red systems or radio systems to transmit an authenticating signal from an authentication medium to an access control terminal of a security control system. Close proximity keyless systems, (i.e. between direct contact and a threshold of a few centimeters), for example RFID based systems, allow determination of a user's proximity to a barrier by appropriate placement of a reader of the access control terminal. However, as their name implies close-proximity keyless systems suffer from the disadvantage that they require a very close proximity of the authentication medium to the access control terminal. In order to overcome this disadvantage, mid-range keyless entry systems have been proposed, in particular based on BLE and/or UWB communication. UWB systems are advantageous since they allow reliable mid-range communication without a user having to precisely identify the reader device. As the communicating range between an authentication device and an UWB access control terminal increases, the convenience and ease-of-use increases, because the authentication medium does not need to be placed in very close range, such as less than one centimeter from the UWB access control terminal. The user no longer needing to precisely locate the UWB access control terminal (or its antenna) not only adds convenience but also has the potential to speed up the process, thereby increasing the throughput through a barrier.

The network topologies of said access control systems typically comprise a central access rights server to which each access control terminal is connected. An authentication medium held by a user is brought close to an access control terminal for wireless exchange of credentials. These credentials are then transmitted from the access control terminal to the server, which performs a look-up in a database of access rights. If access is granted, the server sends a signal to the access control terminal, which allows the user access through an electronically controlled doorway. The disadvantage of this topology is that it requires each access control terminal to be permanently connected to the server, which is associated with considerable cost in wiring and presents a single point of failure. More modern access control systems have relegated access control decisions to the access control terminals themselves. If these access control terminals are not connected to the server, however, the issue then arises of how and when to update the database of access rights in each access control terminal.

Other access rights systems invert the situation by storing a database or table of the user's access rights in the mediums themselves. At an access control point, the access control terminals and the authentication medium exchange data containing an identifier of the access control terminal and the user's access rights at that access control point. Authentication mediums are however vulnerable entities with respect to date protection. Further, updating access rights becomes cumbersome as every affected party must have its authentication medium updated with new access rights.

Other solutions relate to access enforcement points that are configured to operate an access point, e.g. unlocking and/or locking a door, and that constantly communicate with another device. Such access enforcement points may operate by a battery that has to be exchanged from time to time. Considering that an access enforcement point that constantly communicates with another device and/or searches for another device constantly consumes considerable amounts of energy, such a solution is not necessarily energy-efficient and further requires maintenance.

None of the known concepts provides an energy-efficient and at the same time easy-to-use solution for a wakeup-signal forwarding method. Therefore, there is a need for such solution.

### SUMMARY OF THE INVENTION

It is an object of the present invention is to provide a wakeup-signal forwarding method for an access enforcement point and a wakeup-signal forwarding method for an access control system, which at least partially overcomes the above-mentioned disadvantages. In particular, it is an object of the present invention to provide a wakeup-signal forwarding method which is energy-efficient and intuitive to use.

According to the present invention, the above-mentioned objects are addressed through the features of the independent claims. In addition, further advantageous embodiments follow from the dependent claims and the description.

According to a first aspect of the present invention, a computer-implemented wakeup-signal forwarding method for access control is provided. The method may be performed by a first access enforcement point, e.g. may be performed at least by a first access enforcement point. The first access enforcement point may be operable in a low-power mode. The first access enforcement point may be operable in in an active mode. The first access enforcement point may be configured to cause operation of a first access point. The first access enforcement point being in the low-power mode may be configured to operate at a lower power consumption as compared to a power consumption of the first access enforcement point being in the active mode. The first access enforcement point may comprise a wakeup receiver configured to receive a wakeup signal. The first access enforcement point may comprise a wakeup transmitter configured to send a wakeup signal. The first access enforcement point may comprise an instruction receiver configured to receive an instruction signal. In the low-power mode of the first access enforcement point, the instruction receiver may be inactive. In the active mode of the first access enforcement point, the instruction receiver may be active. The method may comprise receiving, e.g. by the wakeup receiver of the first access enforcement point, the first access enforcement point e.g. being in the low-power mode, a first wakeup signal. The method may comprise determining whether the first wakeup signal is designated to cause switching of the first access enforcement point into the active mode. The method may comprise, e.g. if the first wakeup signal is determined to not being designated to cause switching of the first access enforcement point into the active mode, sending, using the wakeup transmitter, a second wakeup signal. The second wakeup signal may preferably correspond to the first wakeup signal. The first access enforcement point may remain in the low-power mode.

The method may allow to wake up an access enforcement point/to switch an access enforcement point into the active mode, e.g. even if the access enforcement point is out of reach of the first wakeup signal, e.g. by using another access enforcement point. Without wakeup-signal forwarding, it could be impossible to cause switching of an access enforcement point into the active mode by the first wakeup signal if the access enforcement point would be out of reach of the first wakeup signal. It could also be impossible to cause operation of the corresponding access point based on an instruction, as the instruction receiver would be inactive due to the access enforcement point being in the low-power mode, since it could be impossible to switch the access enforcement point into the active mode based on the first wakeup signal alone.

Allowing access enforcement points to remain in the low-power mode, when they are not needed/when they are not intended to cause operation of an access point, may decrease the power consumption of access enforcement points. Access enforcement points may be powered by batteries and/or energy harvesting means, e.g. a(n) (indoor) solar cell. Decreasing the power consumption of access enforcement points may increase the reliability and decrease the risk of failure due to the access enforcement point running out of battery. Energy harvesting means need to provide less energy and may be manufactured more cost-efficient. The need of maintenance is reduced. In other words: An access enforcement point that is configured to perform the above wakeup-signal forwarding method essentially only needs maintenance in case it is damaged or in case it runs out of energy.

The method also allows for an access enforcement point to fulfill different functions, i.e. to cause operation of a specific access point, and to forward wakeup information. Thereby, the need for additional wakeup-signal repeaters may be overcome.

The method may allow to switch an access enforcement point into an active mode and to cause operation of a corresponding access point in a very short time interval, e.g. such that a user may not recognize any latency in causing operation of the corresponding access point.

The term access enforcement point may include any device that is capable of causing operation, e.g. unlocking and/or locking, of an access point. In particular, the access enforcement point may not have decision taking capabilities for deciding whether to unlock or not based on the validity of a credential. Rather, the access enforcement point may be capable of performing or causing unlocking and/or locking of a respective access point upon receiving a respective command. Each access enforcement point may be associated to/may have an access point. Each access point may be associated to/may have an access enforcement point. For example, the access enforcement point may include an actuator for unlocking and/or locking the access point. Thus, in other words, the access enforcement point may be understood as a stupid device which may only execute commands without taking any decision, e.g., on whether a user has an intent to unlock or whether the user is allowed to access a respective access point. Further, the access enforcement point may be capable of low-power wireless communication in order to receive said commands, in particular from one or more access decision points and/or from an authentication medium. Due to this configuration of the access enforcement point, the access enforcement point may be operated with a very low energy consumption. This is beneficial because the need for maintenance is significantly reduced. In other words: An access enforcement point essentially only needs maintenance in case if it is damaged or in case if it runs out of energy. The access enforcement point may not be connected to a power grid in order to keep the installation effort low.

The access enforcement point may be a low-power access enforcement point.

It may be provided that an access enforcement point causes unlocking of an associated access point e.g. upon receiving an unlock-command from an access decision point. The access enforcement point may therefore include means for performing/causing unlocking, e.g., a lock. The access enforcement point may be configured to cause operation of the access point, in particular unlocking and/or locking of the access point.

The first access point may be a postbox and/or a parcel box and/or a door and/or a lockable piece of furniture and/or an access restricted trigger mechanism. An access restricted trigger mechanism may be provided at an elevator, wherein unlocking the access restricted trigger mechanism causes the elevator to perform a predetermined action, e.g., moving to a specific floor or locking the elevator while keeping the elevator door open.

Operation of an access point may e.g. comprise unlocking and/or locking of the access point.

The first wakeup signal may be received by a plurality of access enforcement points, e.g. by a plurality of first access enforcement points. Each access enforcement may individually determine whether the first wakeup signal is designated to cause switching of the respective first access enforcement point, and may e.g. send a respective wakeup signal if it is respectively determined that the first wakeup signal is not designated to cause switching of the respective first access enforcement point.

The low-power mode may be a low-power receiving mode in which the first access enforcement point preferably only responds/takes action upon receiving a wakeup signal. Other signals, e.g. instruction signals, may be ignored by the first access enforcement point, e.g. in order to save energy.

When the wakeup receiver is active, e.g. when the first access enforcement point is in the low-power mode or in the active mode, the wakeup receiver may be in a receiving mode and/or in a listening mode. When the wakeup transmitter is active, e.g. when the first access enforcement point is in the low-power mode or in the active mode, the wakeup transmitter may be in a sending mode and/or in a "ready-to-send" mode. When the instruction receiver is active, e.g. when the first access enforcement point is in the active mode, the instruction receiver may be in a receiving mode and/or in a listening mode.

E.g. when being active, the wakeup receiver may be able/may be configured to receive a wakeup signal. E.g. when being active, the wakeup transmitter may be able/may be configured to send a wakeup signal. E.g. when being active, the instruction receiver may be able/may be configured to receive an instruction signal. E.g. when being inactive, the wakeup receiver may not be able/may not be configured to receive a wakeup signal. E.g. when being inactive, the wakeup transmitter may not be able/may not be configured to send a wakeup signal. E.g. when being inactive, the instruction receiver may not be able/may not be configured to receive an instruction signal.

An inactive component may be a sleeping component and/or a deactivated component. E.g., the wakeup receiver being inactive may be the wakeup receiver when sleeping/when being deactivated. An inactive component may be in a non-operating state. An active component may be in an operating state.

The low-power mode of the first access enforcement point may be a mode in which the wakeup receiver is active. The low-power mode of the first access enforcement point may be a mode in which the first access enforcement point is able/is configured to receive a wakeup signal via the wakeup receiver.

The active mode of the first access enforcement point may be a mode in which the instruction receiver is active. The active mode of the first access enforcement point may be a mode in which the first access enforcement point is able to receive an instruction signal via the instruction receiver. The active mode of the first access enforcement point may be a mode in which the wakeup receiver is active. The active mode of the first access enforcement point may be a mode in which the first access enforcement point is able to receive a wakeup signal via the wakeup receiver.

In other words: The wakeup receiver may be able to receive a wakeup signal both in the active mode and in the low-power mode of the first access enforcement, i.e. the wakeup receiver may be active both in the active mode and in the low-power mode of the first access enforcement point. The instruction receiver e.g. may be able to receive a wakeup signal only in the active mode of the first access enforcement and e.g. not in the low-power mode, i.e. the wakeup receiver e.g. may be active only in the active mode of the first access enforcement point and e.g. may be inactive in the low-power mode.

The wakeup receiver e.g. may be always active, i.e. the wakeup receiver may be active when the first access enforcement point is in the active mode, and also when the first access enforcement point is in the low-power mode.

The wakeup transmitter e.g. may be always active, i.e. the wakeup receiver may be active when the first access enforcement point is in the active mode, and also when the first access enforcement point is in the low-power mode. The wakeup transmitter may also be inactive while the first access enforcement point is in the low-power mode. The wakeup transmitter may be activated while the first access enforcement point may remain in the low-power mode, e.g. after receiving the first wakeup signal. The method may comprise activating the wakeup transmitter, e.g. after receiving the first wakeup signal, and e.g. prior to sending the second wakeup signal.

In the low-power mode of the first access enforcement point, the wakeup transmitter may be active. In the active mode of the first access enforcement point, the wakeup transmitter may be active. Sending, using the wakeup transmitter, of the second wakeup signal may be performed with the first access enforcement point being in the low-power mode.

The first access enforcement point may comprise a wakeup transceiver comprising the wakeup receiver and the wakeup transmitter. Features disclosed with respect to the wakeup transmitter/receiver may e.g. apply to the wakeup transceiver as appropriate. E.g., the wakeup transceiver may e.g. be able to send wakeup signals and to receive wakeup signals when the first access enforcement point is a low-power mode, and e.g. also when the first access enforcement point is in the active mode. The wakeup transmitter may also be inactive in the low-power mode of the first access enforcement point, and may e.g. be active in the active mode of the first access enforcement point.

The wakeup receiver, e.g. being active, may e.g. operate at a lower power consumption as compared to a power consumption of the instruction receiver, e.g. when being active. The wakeup receiver and the wakeup transmitter, e.g. being active, may e.g. operate at a lower total power consumption as compared to a power consumption of the instruction receiver, e.g. when being active.

When inactive, the instruction receiver may have a lower power consumption as compared to the power consumption when being active.

In the active mode, the first access enforcement point may be able to cause operation of the first access point. In the low-power mode, the first access enforcement point e.g. may be able to cause operation of the first access point or the first access enforcement point e.g. may not be able to cause operation of the first access point.

Determining whether the first wakeup signal is designated to cause switching of the first access enforcement point into the active mode e.g. may be performed by the wakeup receiver and/or by the first access enforcement point, e.g. via the wakeup receiver. Determining whether the first wakeup signal is designated to cause switching of the first access enforcement point into the active mode e.g. may be performed based on the first wakeup signal.

The first wakeup signal e.g. may be sent from an access decision point. The first wakeup signal e.g. may be sent from a user device and/or by a user, e.g. via NFC or BLE.

The second wakeup signal may e.g. be similar to the first wakeup signal. The second wakeup signal may e.g. be identical to the first wakeup signal. The second wakeup signal may e.g. comprise identical information as comprised in the first wakeup signal. The second wakeup signal e.g. may be an amplification of the first wakeup signal. The second wakeup signal e.g. may have same properties/same signal-characteristics as compared to the first wakeup signal. The second wakeup signal may comprise wakeup information also comprised in the first wakeup signal.

The second wakeup signal does not need to be identical to the first wakeup signal, i.e. the second wakeup signal may be different from the first wakeup signal.

The first access enforcement point may e.g. be understood/may act as a repeater of the first wakeup signal. The second wakeup signal corresponding to the first wakeup signal e.g. may be understood as a forwarded first wakeup signal. The method may be understood as a "wakeup-signal forwarding method" in the sense that wakeup information comprised in the first wakeup signal is forwarded by means of the second wakeup signal.

The first wakeup signal may include designation information, e.g. preferably indicating a designation access enforcement point that is intended to be switched into the active mode. Determining whether the first wakeup signal is designated to cause switching of the first access enforcement point into the active mode may be performed based on the designation information. The second wakeup signal may preferably also include the designation information. The second wakeup signal may more preferably correspond to the first wakeup signal.

The designation information may comprise a designation address, e.g. a designation address indicating the designation access enforcement point. The designation information may comprise a designation code. Determining whether the first wakeup signal is designated to cause switching of the first access enforcement point into the active mode may comprise checking, e.g. by the first access enforcement point, whether the designation code matches a predetermined condition.

The second wakeup signal may comprise an address of the first access enforcement point. E.g., the second wakeup signal may be the same as the first wakeup signal with the address of the first access enforcement point added to the first wakeup signal. This may allow to prevent that the first access enforcement point sends a further *n+1th* wakeup signal in response to receiving an *nth* wakeup signal (n being larger than two), i.e. this may allow to prevent "ping-pong" repeating.

In some embodiments, sending the second wakeup signal e.g. may only be performed under the condition that no other wakeup signal corresponding to the first wakeup signal was received by the wakeup receiver of the first access enforcement point within a time period before receiving the first wakeup signal. In some embodiments, sending the second wakeup signal e.g. may only be performed under the condition that no other wakeup signal including the same designation information as included in the first wakeup signal that was received by the wakeup receiver of the first access enforcement point within a time period before receiving the first wakeup signal.

The time period may be predetermined and/or adjustable, e.g. dynamically adjustable.

It may be unlikely that an access point is operated twice within short time intervals, e.g. within a few seconds or milliseconds. Thus, the time period may allow to prevent "ping-pong" wakeup signal forwarding, where multiple access points forward wakeup signals in a "snowball system", causing more and more wakeup signals. Hence, the time period may prevent "excessive" wakeup-signal forwarding.

The first access enforcement point may comprise a whitelist and/or a blacklist of addresses of access enforcement points. Sending the second wakeup signal may be performed only if the designation information matches a blacklist/whitelist criterion. E.g., the second wakeup signal may be only sent if the designation information matches an entry of the whitelist, and/or the second wakeup signal may not be sent if the designation information matches an entry of the blacklist.

In order to avoid ping-pong wakeup-signal forwarding, the first access enforcement point may also comprise a counter that is decremented when sending a wakeup signal, and sending the wakeup signal may only be performed if the counter is above a predetermined threshold.

The method may comprise, e.g. if the first wakeup signal is determined to be designated to cause switching of the first access enforcement point into the active mode, switching the first access enforcement point from the low-power mode into the active mode. The method may optionally further comprise receiving, by the active instruction receiver of the first access enforcement point being in the active mode, an instruction signal, preferably from an access decision point. The method may e.g. further comprise causing operation of the first access point according to the instruction signal.

This may allow to cause operation of the first access point in an energy-efficient way, by minimizing the time that the instruction receiver is active and consumes more energy as compared to being inactive.

The wakeup receiver may e.g. switch the first access enforcement point into the active mode.

Switching the first access enforcement point from the low-power mode into the active mode may comprise activating the instruction receiver. In the active mode, the first access enforcement point may be able to receive instruction signals, e.g. via the active instruction receiver. In the active mode, the first access enforcement point may be able to cause operation of the first access point. When being in the low-power mode, the first access enforcement point may be able to cause operation of the first access point or may not be able to cause operation of the first access point.

The access decision point may comprise a transmitter arrangement that comprises the wakeup transmitter and the instruction transmitter. The wakeup transmitter of the access decision point and the instruction transmitter of the access decision point e.g. may be a single component. The wakeup transmitter of the access decision point and the instruction transmitter of the access decision point may be separate components.

The term access decision point may include any kind of access controller which is capable to decide whether an access point should be operated or not, e.g. unlocked or not. It may be capable of determining an intent to unlock an access point. Further, it may be capable of checking the validity of a user's credential. An access decision point may comprise an integrated and/or spaced apart tracking system which is capable of tracking a position of a user's authentication medium. Examples for said tracking systems are camera tracking systems and/or ultra-wideband tracking systems. In case if the access decision point comprises an ultra-wideband tracking system, the ultra-wideband tracking system may include a plurality of ultra-wideband anchors facilitating ranging of the authentication medium, in particular to determine successive positions of the authentication medium. Thus, an access decision point according to embodiments of the present invention may include an identification module which may be configured to verify a credential and/or an intent detection module which may for example track the user as described above, e.g. in order to determine the user's intent to access. The modules may be arranged spaced apart from each other and communicating with each other.

The access decision point may be connected to a power grid and/or may comprise a battery which is regularly to be replaced in order to prevent the access decision point from running out of energy. In a particular embodiment, the access decision point may be connected to a power grid and additionally comprise a battery in order to buffer potential blackouts in the power grid. An access control system then advantageously is capable of temporarily work during a blackout of a power grid.

The access decision point may be configured to communicate wirelessly with the access enforcement point. An access control system may include more than one access decision point and e.g. a plurality of access enforcement point. The number of access enforcement points comprised in the access control system may be larger than the number of access decision points comprised in the access control system.

The communication between the access enforcement point and the access decision point e.g. may be performed wirelessly via a low power communication protocol, such as Bluetooth Low Energy (BLE) or any other suitable low power communication protocols. Sending an instruction request by the access enforcement point therefore may be for example an advertising signal via Bluetooth.

The access decision point may be configured to determine an intent of the user, e.g. to determine an intent of the user upon receiving the signal of the authentication medium and/or e.g. upon receiving an instruction request. The access decision point may be configured to first send the first wakeup signal, and subsequently the instruction signal, such that the instruction signal can be received by the active instruction receiver of the first access enforcement point being in the active mode.

The access decision point may send the instruction for a predetermined amount of time. The access decision point may be connected to a power grid. Thus, sending instructions by the access decision point may not be energy-critical. Sending the instruction for a predetermined time period may enable the access enforcement point to receive an instruction immediately after switching into the active mode. It may also remove the need to send an instruction request by the access enforcement point. Thus, sending the instruction for a predetermined time period may allow to reduce the energy consumption by the access enforcement point.

The access decision point may be configured to send an instruction comprising a no-action command, e.g. if no intent of a user is determined and/or no signal of an authentication medium of a user is received and/or no instruction request is received from an access decision point. Sending an instruction comprising a no-action command may comprise not sending any instruction, i.e. the access enforcement point may be configured to interpret an absence of a received instruction, e.g. after having sent an instruction request, as a no-action command/a no-action instruction.

The first wakeup signal may be configured to cause the first access enforcement point to switch from the low-power mode into the active mode. The first wakeup signal may be configured to cause the first access enforcement point to switch its instruction receiver from being inactive to being active.

The first access enforcement point may comprise an instruction request transmitter. The instruction request transmitter may be active when the first access enforcement point is in the active mode. The method may further comprise, e.g. upon switching the first access enforcement point into the active mode, sending, by the instruction request transmitter of the first access enforcement point being in the active mode, an instruction request signal.

Sending an instruction signal, e.g. by an access decision point, e.g. may be based on receiving an instruction request signal.

The first access enforcement point e.g. may comprise an instruction transceiver comprising the instruction request transmitter and the instruction receiver. The instruction request transmitter and the instruction receiver e.g. may also be separate components.

The method may further comprise, e.g. after causing operation of the first access point according to the instruction signal, switching the first access enforcement point from the active mode into the low-power mode.

The inactive instruction receiver of the first access enforcement point being in the low-power mode e.g. may not be able/may not be configured to receive an instruction signal. The first access enforcement point being in the low-power mode may e.g. not be able to cause operation of the first access point.

This may allow to achieve a particularly low power consumption of the first access enforcement point when being in the low-power mode.

The wakeup receiver, preferably the wakeup receiver and the wakeup transmitter, e.g. being active, may e.g. be configured to operate at a lower power consumption as compared to a power consumption of the active instruction receiver of the first access enforcement point being in the active mode. Optionally, the sensitivity of the wakeup receiver e.g. may be lower than the sensitivity of the active instruction receiver.

This may allow to achieve a particularly low power consumption of the first access enforcement point.

The wakeup receiver, preferably the wakeup receiver and the wakeup transmitter, e.g. being active, e.g. may be configured to operate at a lower total power consumption as compared to a power consumption of the active instruction receiver of the first access enforcement point being in the active mode.

The wakeup receiver may have a lower sensitivity as compared to the instruction receiver. The lower sensitivity of the wakeup receiver as compared to the instruction receiver e.g. may allow a lower power consumption of the wakeup receiver as compared to the instruction receiver.

E.g., the wakeup receiver may have a higher receiving threshold as compared to the instruction receiver. The receiving threshold may correspond to the minimal signal level/minimal signal amplitude/minimal signal strength that can be received and processed by a respective receiver. In other words: A receiver may not be able to receive/to process/to react upon a signal that has a signal level/a signal amplitude/a signal strength that is below a receiving threshold of the respective receiver.

Wakeup signals may have a signal strength above the receiving threshold of the wakeup receiver. Instruction signals may have a signal strength below the receiving threshold of the wakeup receiver, but e.g. above the receiving threshold of the instruction receiver.

The wakeup receiver and the instruction receiver may e.g. use different communication protocols. E.g., the wakeup receiver may use a communication protocol that may be particularly energy efficient, e.g. that consumes less energy as compared to a communication protocol used by the instruction receiver. The instruction receiver may e.g. use a communication protocol that may allow a higher information transmission rate. A wakeup signal may be a rather simple signal as it may only be intended to wake up a particular access enforcement point. An instruction signal may be a more complex signal as compared to a wakeup signal, as an instruction signal may cause a respective access enforcement point to cause operation of a respective access point, e.g. locking and/or unlocking of an access point. Accordingly, an instruction signal may require a higher security level as compared to a wakeup signal.

The term "communication protocol" generally refers to "a system of rules that allows information transmission". It may in particular e.g. refer to used bandwidths, to various types of information encoding, to carrier frequencies, to modulation types, signal amplitudes/signal levels and/or communication ranges.

The wakeup receiver may e.g. use on-off keying. The instruction receiver may e.g. use LoRa.

The instruction receiver may have a longer receiving range as compared to the wakeup receiver. In other words: The instruction receiver may be able to receive a signal that was send from a distant location, while a wakeup receiver might not be able to receive a signal sent from the same location, e.g. due to the signal strength being too low.

E.g., the wakeup receiver may not be able to directly receive a first wakeup signal sent from an access decision point, e.g. as the access decision point may be too far away such that a signal strength of the first wakeup signal directly sent from the access decision point may be below a receiving threshold of the wakeup receiver. However, a signal strength of a second wakeup signal sent from another access enforcement point that is closer to the access enforcement point may have a signal strength above the receiving threshold of the wakeup receiver. Hence, it may still be possible to switch an access enforcement point into the active mode based on a first wakeup signal whose strength is below the receiving threshold of the wakeup receiver of the access enforcement point, i.e. via the second wakeup signal. Since the active instruction receiver may have a better sensitivity/a lower receiving threshold, the active instruction receiver still may be able to receive instruction signals directly sent from the access decision point.

The method may be performed, e.g. at least, by the first access enforcement point and a second access enforcement point. The second access enforcement point may comprise a wakeup receiver. The second access enforcement point may comprise a wakeup transmitter. The second access enforcement point may comprise an instruction receiver. The second access enforcement point may be configured to cause operation of a second access point. The method may further comprise receiving, by the wakeup receiver of the second access enforcement point being in the low-power mode, the second wakeup signal. The method may further comprise determining whether the second wakeup signal is designated to cause switching of the second access enforcement point into the active mode. The method may comprise, e.g. if the second wakeup signal is determined to be designated to cause switching of the second access enforcement point into the active mode, switching the second access enforcement point from the low-power mode into the active mode, e.g. where the instruction receiver is active. The method optionally may further comprise receiving, by the active instruction receiver of the second access enforcement point being in the active mode, an instruction signal, preferably from an access decision point. The method optionally may further comprise causing operation of the second access point according to the instruction signal.

Features and functionalities disclosed with respect to the first access enforcement point may e.g. apply to the second access enforcement point as applicable. The second access enforcement point may have the same respective functionalities as the first access enforcement point. The second access enforcement point may be configured in the same manner as the first access enforcement point.

The second access enforcement point may be operable in a low-power mode. The second access enforcement point may be operable in in an active mode. The second access enforcement point may be configured to cause operation of a second access point, e.g. when being in the active mode. The second access enforcement point being in the low-power mode may be configured to operate at a lower power consumption as compared to a power consumption of the second access enforcement point being in the active mode. The wakeup receiver of the second access enforcement point may be configured to receive a wakeup signal. The wakeup transmitter of the second access enforcement point may be configured to send a wakeup signal. The instruction receiver of the second access enforcement point may be configured to receive an instruction signal. In the low-power mode of the second access enforcement point, the instruction receiver may be inactive. In the active mode of the second access enforcement point, the instruction receiver may be active. The method may comprise, e.g. if the second wakeup signal is determined to not being designated to cause switching of the second access enforcement point into the active mode, sending, using the wakeup transmitter, a third wakeup signal. The third wakeup signal may preferably correspond to the second wakeup signal.

The terms "first access enforcement point" and "second access enforcement point" may be used interchangeably where appropriate. An access enforcement point may be the "first access enforcement point" in one specific occasion, and the "second access enforcement point" in another occasion, and vice versa.

The instruction receiver of the second access enforcement point may be active in the active mode.

The first wakeup signal e.g. may not be designated to the first access enforcement point but e.g. may be designated to the second access enforcement point.

Determining whether the second wakeup signal is designated to cause switching of the second access enforcement point into the active mode may e.g. be performed by the wakeup receiver of the second access enforcement point and/or by the second access enforcement point, e.g. via the wakeup receiver.

The first access enforcement point and/or the second access enforcement point may comprise an energy storage and e.g. preferably energy harvesting means. The respective energy harvesting means may optionally include a solar cell, e.g. an indoor solar cell.

This may allow to operate the first access enforcement point and/or the second access enforcement point without the need of additional wiring works, and e.g. independently of the power grid.

The method may be performed by the first access enforcement point and an access decision point, optionally e.g. by the first access enforcement point and the access decision point and a second access enforcement point. The access decision point may comprise a transmitter arrangement. The method may further comprise sending, e.g. by the transmitter arrangement of the access decision point, the first wakeup signal. The method may further comprise sending, e.g. by the transmitter arrangement of the access decision point, the instruction signal.

The transmitter arrangement may be/may consist of/may comprise a single transmitter serving as a wakeup transmitter and as an instruction transmitter. The transmitter arrangement may be/may consist of/may comprise a wakeup transmitter and an instruction transmitter, both e.g. being separate from each other.

The instruction signal may comprise instructions that cause the first or the second access enforcement point to cause operation of the first or the second access point, respectively.

The first access enforcement point and/or the second access enforcement point and/or the access decision point respectively may e.g. be configured to send and/or receive signals, e.g. respective signals, wirelessly.

In other words: Wakeup signals and/or instruction signals and/or instruction request signals may be wireless signals.

According to a second aspect of the present invention, an access control system may be provided. The access control system may comprise an access decision point, a first access enforcement point and a first access point. The first access enforcement point may be operable in a low-power mode. The first access enforcement point may be operable in an active mode. The first access enforcement point may be configured to cause operation of the first access point. The access decision point may comprise a transmitter arrangement, which e.g. may be configured to send a wakeup signal and an instruction signal. The first access enforcement point being in the low-power mode may be configured to operate at a lower power consumption as compared to a power consumption of the first access enforcement point being in the active mode. The first access enforcement point may comprise a wakeup receiver configured to receive a wakeup signal. The first access enforcement point may comprise a wakeup transmitter configured to send a wakeup signal. The first access enforcement point may comprise an instruction receiver configured to receive an instruction signal. In the low-power mode of the first access enforcement point, the instruction receiver may be inactive. In the active mode of the first access enforcement point, the instruction receiver may be active. The first access enforcement point may be configured to receive, e.g. by the wakeup receiver and e.g. being in the low-power mode, a first wakeup signal. The first access enforcement point may be configured to determine whether the first wakeup signal is designated to cause switching of the first access enforcement point into the active mode. The first access enforcement point may be configured to send, using the wakeup transmitter, a second wakeup signal, e.g. if the first wakeup signal is determined to not being designated to cause switching of the first access enforcement point into the active mode. The second wakeup signal may preferably correspond to the first wakeup signal. More preferably, the access control system may be configured to be used in a computer-implemented wakeup-signal forwarding method according to the first aspect of the present invention.

The wakeup receiver of the first access enforcement point, preferably the wakeup receiver and the wakeup transmitter, may be configured to operate at a lower power consumption, e.g. a lower total power consumption, as compared to a power consumption of the active instruction receiver of the first access enforcement point being in the active mode.

According to a third aspect of the present invention, an access enforcement point may be provided. The access enforcement point may be operable in a low-power mode. The access enforcement point may be operable in an active mode. The access enforcement point may be configured to cause operation of an access point. The access enforcement point being in the low-power mode may be configured to operate at a lower power consumption as compared to a power consumption of the access enforcement point being in the active mode. The access enforcement point may comprise a wakeup receiver configured to receive a wakeup signal. The access enforcement point may comprise a wakeup transmitter configured to send a wakeup signal. The access enforcement point may comprise an instruction receiver configured to receive an instruction signal. In the low-power mode of the access enforcement point, the instruction receiver may be inactive. In the active mode of the access enforcement point, the instruction receiver may be active. The access enforcement point may be configured to receive, e.g. by the wakeup receiver and e.g. being in the low-power mode, a first wakeup signal. The access enforcement point may be configured to determine whether the first wakeup signal is designated to cause switching of the access enforcement point. The access enforcement point may be configured to send, using the wakeup transmitter, a second wakeup signal, e.g. if the first wakeup signal is determined to not being designated to cause switching of the access enforcement point into the active mode. The second wakeup signal may preferably correspond to the first wakeup signal. More preferably, the access enforcement point may be configured to be used in a computer-implemented wakeup-signal forwarding method according to the first aspect of the present invention.

The access enforcement point e.g. may be the first access enforcement point or the second access enforcement point.

According to a fourth aspect of the present invention, a use of an access enforcement point according to the third aspect of the present invention in a computer-implemented wakeup-signal forwarding method according to the first aspect of the present invention may be provided.

According to a fifth aspect of the present invention, a computer program comprising computer-readable instructions which when executed by a data processing apparatus cause the data processing apparatus to perform the computer-implemented method according to the first aspect of the present invention may be provided.

All technical implementation details and advantages described with respect to the first aspect of the present invention are self-evidently mutatis mutandis applicable for the second, third, fourth and fifth aspects of the present invention and vice versa.

### BRIEF DESCRIPTION OF THE DRAWINGS

The present invention will be explained in more detail, by way of example, with reference to the drawings in which:
- Figure 1: is a schematic perspective view of a building comprising a plurality of access enforcement points that implement a wakeup-signal forwarding method according to embodiments of the present invention.
- Figure 2: is a high-level flow chart diagram illustrating a first sequence of a wakeupsignal forwarding method according to embodiments of the present invention.
- Figure 3: is a high-level flow chart diagram illustrating a second sequence of a wakeupsignal forwarding method according to embodiments of the present invention.
- Figure 4: is a high-level flow chart diagram illustrating a third sequence of a wakeupsignal forwarding method according to embodiments of the present invention.
- Figure 5: is a high-level flow chart diagram illustrating a fourth sequence of a wakeupsignal forwarding method according to embodiments of the present invention.
- Figure 6: is a highly schematic drawing of a first access enforcement point and a first access point according to embodiments of the present invention.
- Figure 7: is a highly schematic drawing of an access control system according to embodiments of the present invention.

### FIGURATIVE DESCRIPTION OF EMBODIMENTS

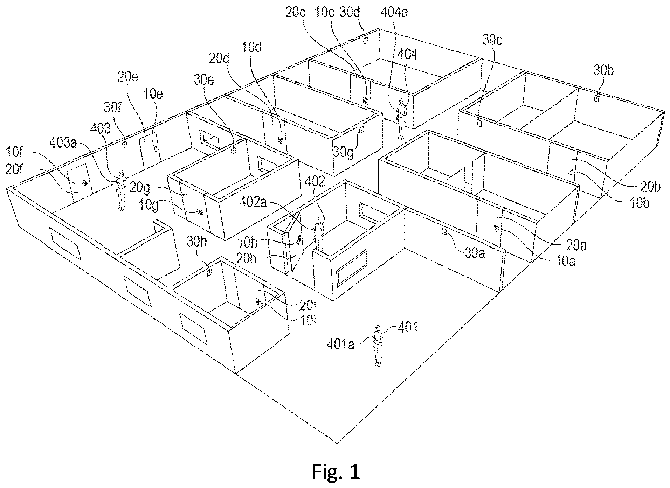

Reference will now be made to exemplary embodiments of the invention, examples of which are illustrated in the accompanying figures. Wherever possible, the same reference numbers will be used throughout the drawings to refer to the same or like parts. Moreover, the features explained in context of a specific embodiment, for example that one of Figure 1, also apply to any one of the other embodiments, when appropriate, unless differently described.

Figure 1 is a schematic perspective view of a building comprising a plurality of access enforcement points that implement a wakeup-signal forwarding method according to embodiments of the present invention.

In the description of Figure 1, the reference signs 10a, 10b, 10c, 10d, 10e, 10f, 10g, 10h, 10i are abbreviated as 10a, ..., 10i; the reference signs 20a, 20b, 20c, 20d, 20e, 20f, 20g, 20h, 20i are abbreviated as 20a, ..., 20i; the reference signs 30a, 30b, 30c, 30d, 30e, 30f, 30g, 30h are abbreviated as 30a, ..., 30h; the reference signs 401, 402, 403, 404 are abbreviated as 401, ..., 404; and the reference signs 401a, 402a, 403a, 404a are abbreviated as 401a, ..., 404a.

The building comprises a plurality of access enforcement points 10a, ...,10i. Each access enforcement point 10a, ..., 10i is configured to operate a respective access point 20a, ..., 20i. Each access enforcement point 10a, ..., 10i includes, in the illustrated example of Figure 1, an actuator in the door leaf which is capable to operate, e.g. unlock and/or lock, the access point 20a, ..., 20i. Further, the building is equipped with a plurality of access decision points 30a, ..., 30h which are distributed throughout the building. Each access enforcement point 10a, ..., 10i comprises a wakeup receiver, a wakeup transmitter and an instruction receiver (not depicted in Figure 1). The access enforcement point 10a, ..., 10i may receive, e.g. via the respective wakeup receiver, a first wakeup signal. The access enforcement point 10a, ..., 10i may determine whether the first wakeup signal is designated to cause switching of the access enforcement point 10a, ..., 10i into the active mode. If the wakeup signal is determined to not being designated to switch the access enforcement point 10a, ..., 10i into the active mode, the access enforcement point 10a, ..., 10i may send, using the respective wakeup transmitter, a second wakeup signal corresponding to the first wakeup signal.

The first wakeup signal e.g. may be sent from an access decision point 30a, ..., 30h. The access decision point 30a, ..., 30h may be too far away from a second access enforcement point 10a, ..., 10i such that the wakeup receiver of the second access enforcement point may be unable to receive the first wakeup signal sent by the access decision point 30a, ..., 30h, e.g. since the signal strength of the first wakeup signal may be below a receiving threshold of the wakeup receiver. The first wakeup signal may then be received by a first access enforcement point 10a, ..., 10i, e.g. an access enforcement point located between the access decision point 30a, ..., 30h and the second access enforcement point 10a, ..., 10i. The first access enforcement point 10a, ..., 10i may then determine that the first wakeup signal is not designated to switch the first access enforcement point 10a, ..., 10i into an active mode. The first access enforcement point 10a, ..., 10i may then send a second wakeup signal corresponding to the first wakeup signal. The second wakeup signal may then have a higher signal strength at the second access enforcement point 10a, ..., 10i, e.g. a signal strength exceeding a receiving threshold of the wakeup receiver of the second access enforcement point 10a, ..., 10i. Then, the second access enforcement point 10a, ..., 10i may determine that the second wakeup signal is intended to switch the second access enforcement point 10a, ..., 10i into the active mode. Then, the second access enforcement point 10a, ..., 10i may be switched into an active mode. The second access enforcement point 10a, ..., 10i being in the active mode may, e.g. subsequently, receive an instruction signal via its instruction receiver. The receiving threshold of the instruction receiver of the second access enforcement point 10a, ..., 10i may be lower as compared to the receiving threshold of the wakeup receiver of the second access enforcement point 10a, ..., 10i, such that a direct communication between the access decision point 30a, ..., 30h and the instruction receiver of the second access enforcement point 10a, ..., 10i is possible while a direct communication between the access decision point 30a, ..., 30h and the wakeup receiver of the second access enforcement point 10a, ..., 10i is not possible.

As it is depicted in Figure 1, a plurality of users 401, ..., 404 are in and near the building. Each user 401, ..., 404 has a respective authentication medium 401a, ..., 404a. The authentication mediums 401a, ..., 404a, according to the illustration of Figure 1, are mobile devices capable of communicating wirelessly. If one access decision point 30a, ..., 30i receives a signal from an authentication medium 401a, ..., 404a of a user 401, ..., 404, which may be a mobile device, and determines an intent of the user 401, ..., 404 to unlock a respective access enforcement point 10a, ..., 10i, the access decision point 30a, ..., 30h may generate an instruction and may send it to the respective access enforcement point 10a, ..., 10i. Prior to sending the instruction signal, the access decision point 30a, ..., 30h may send a first wakeup signal designated to cause switching of the respective access enforcement point 10a, ..., 10i into the active mode.

In some embodiments, generating the instruction may be only performed, if in addition to the intent, a valid credential is successfully validated by the access decision point 30a, ..., 30h. The respective instruction may include an unlock-command causing the respective access enforcement point 10a, ..., 10i to unlock. Hence, the user 401, ..., 404 may be able to access the respective access point 10a, ..., 10i. If no intent to unlock or no valid credential is received/determined by the access decision point 30a, ..., 30h, the instruction may be a no-action command. The no-action command may be also seen in undertaking no action, i.e., not responding at all.

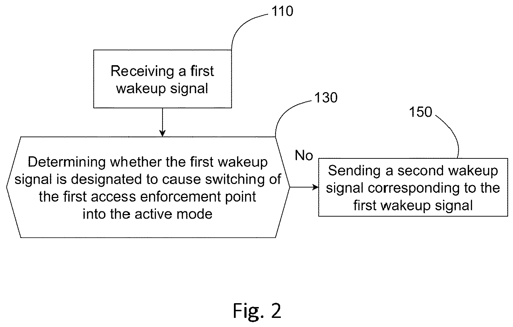

Figure 2 is a high-level flow chart diagram illustrating a first sequence of a wakeup-signal forwarding method according to embodiments of the present invention. In step 110, a first wakeup signal is received by the wakeup receiver of the first access enforcement point. In step 130, it is determined whether the first wakeup signal is designated to cause switching of the first access enforcement point into the active mode. In step 150, after it is determined that the first wakeup signal is not designated to cause switching of the first access enforcement point into the active mode, a second wakeup signal that corresponds to the first wakeup signal is sent by the wakeup transmitter.

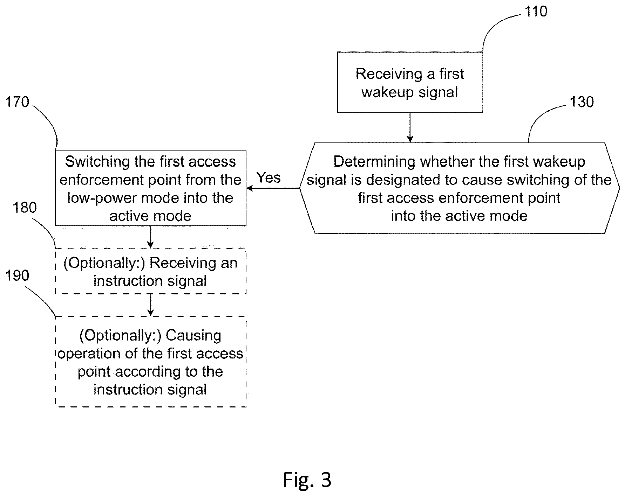

Figure 3 is a high-level flow chart diagram illustrating a second sequence of a wakeup-signal forwarding method according to embodiments of the present invention. Here, in step 130 it is determined that the first wakeup signal is designated to cause switching of the first access enforcement point into the active mode. In step 170, the first access enforcement point is switched from the low-power mode into the active mode. In optional step 180, an instruction signal is received by the first access enforcement point being in the active mode via the active instruction receiver. In optional step 190, operation of the first access point, e.g. unlocking and/or locking, is caused according to received instruction signal.

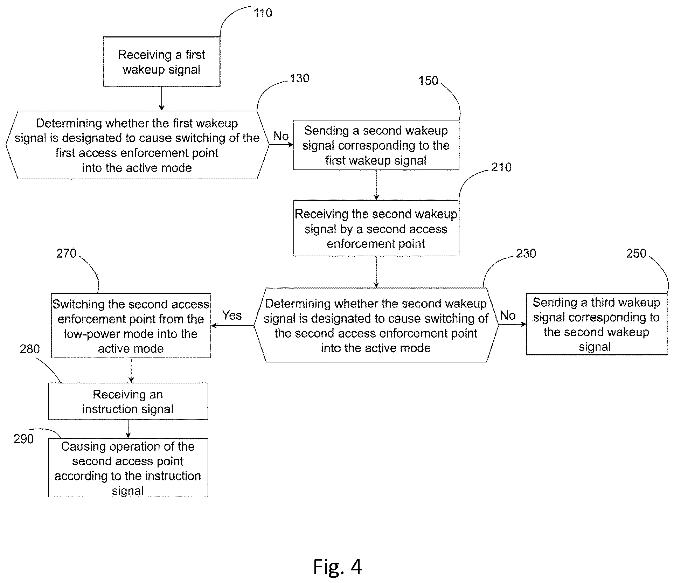

Figure 4 is a high-level flow chart diagram illustrating a third sequence of a wakeup-signal forwarding method according to embodiments of the present invention. In step 130, it is determined that the first wakeup signal is not designated to cause switching of the first access enforcement point into the active mode. Then, in step 150, a second wakeup signal that corresponds to the first wakeup signal is sent by the wakeup transmitter. In step 210, the second wakeup signal is received by the wakeup receiver 12b of the second access enforcement point 10b. In step 230, it is determined whether the second wakeup signal is designated to cause switching of the second access enforcement point into the active mode. If no, a third wakeup signal corresponding to the second wakeup signal is sent in step 250. In this way, wakeup signals may be sent until the designation access enforcement point is reached and subsequently switched into the active mode. If yes, in step 270, the second access enforcement point is switched from the low-power mode into the active mode. Then, in step 280 an instruction signal may be received by the active instruction receiver of the second access enforcement point being in the active mode. Then, in step 290, the second access enforcement point may cause operation of the second access point according to the instruction signal.

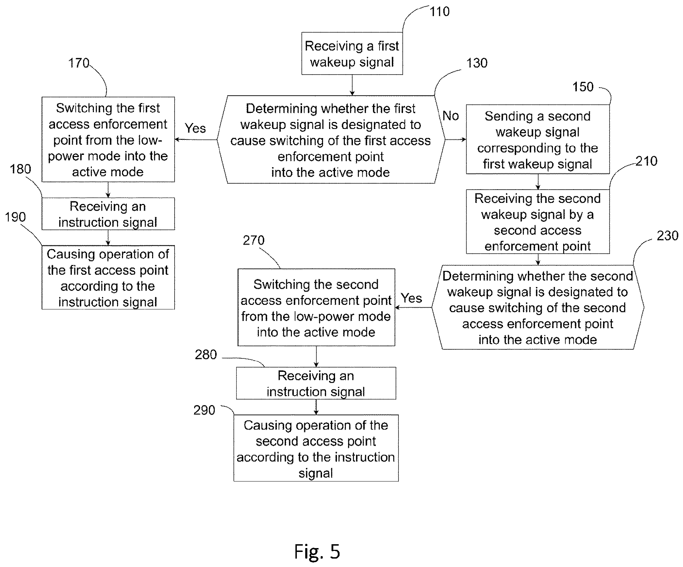

Figure 5 is a high-level flow chart diagram illustrating a fourth sequence of a wakeup-signal forwarding method according to embodiments of the present invention. In step 110, a first wakeup signal is received by the wakeup receiver of the first access enforcement point. In step 130, it is determined whether the first wakeup signal is designated to cause switching of the first access enforcement point into the active mode. If yes, in step 170, the first access enforcement point is switched from the low-power mode into the active mode. Then, in step 180 an instruction signal may be received by the active instruction receiver of the first access enforcement point being in the active mode. Then, in step 190, the first access enforcement point may cause operation of the first access point according to the instruction signal. If no, a second wakeup signal is sent in step 150 that corresponds to the first wakeup signal. In step 210, the second wakeup signal is received by the wakeup receiver 12b of the second access enforcement point 10b. In step 230, it is determined whether the second wakeup signal is designated to cause switching of the second access enforcement point into the active mode. If yes, in step 270, the second access enforcement point is switched from the low-power mode into the active mode. Then, in step 280 an instruction signal may be received by the active instruction receiver of the second access enforcement point being in the active mode. Then, in step 290, the second access enforcement point may cause operation of the second access point according to the instruction signal.

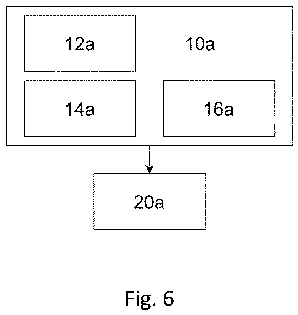

Figure 6 is a highly schematic drawing of a first access enforcement point 10a and a first access point 20a according to embodiments of the present invention. The first access enforcement point 10a is configured to cause operation, e.g. unlocking and/or locking, of the first access point 10a. The first access enforcement point 10a comprises a wakeup receiver 12a configured to receive a wakeup signal, a wakeup transmitter 14a configured to send a wakeup signal, and an instruction receiver 16a configured to receive an instruction signal.

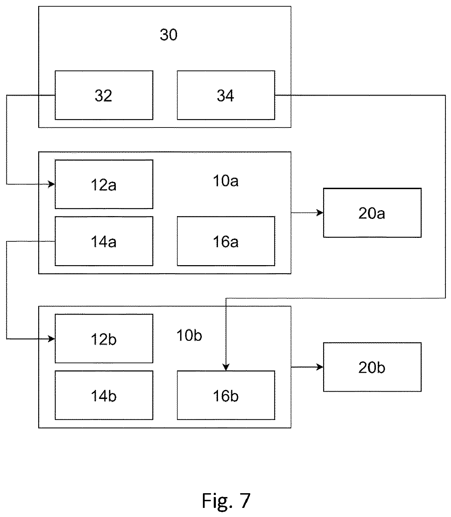

Figure 7 is a highly schematic drawing of an access control system according to embodiments of the present invention. The access control system comprises an access decision point 30, a first access enforcement point 10a and a second access enforcement point 10b. The access decision point comprises a wakeup transmitter 32 and an instruction transmitter 34. The first access enforcement point 10a comprises a wakeup receiver 12a, a wakeup transmitter 14a und an instruction receiver 16a. The first access enforcement point 10a is configured to operate a first access point 20a. The second access enforcement point comprises a wakeup receiver 12b, a wakeup transmitter 14b und an instruction receiver 16b. The second access enforcement point 10b is configured to operate a second access point 20b. Some possible communication links/channels are indicated by the arrows. E.g., the wakeup transmitter 32 of the access decision point 30 may send a first wakeup signal designated to cause switching of the second access enforcement point 10b into the active mode. The wakeup receiver 12a of the first access enforcement point 10a may receive the first wakeup signal. The wakeup receiver 12b of the second access enforcement point 10b may be unable to receive the first wakeup signal, e.g. because the signal strength of the first wakeup signal may be too low at the wakeup receiver 12b of the second access enforcement point 10b/below a receiving threshold of the wakeup receiver 12b of the second access enforcement point 10b. The first access enforcement point 10a may determine that the first wakeup signal is not designated to cause switching of the first access enforcement point 10a into the active mode. The first access enforcement point 10a may then send, e.g. via its wakeup transmitter 14a, a second wakeup signal. The second access enforcement point 10b may receive the second wakeup signal by its wakeup receiver 12b. The second access enforcement point 10b may then switch into the active mode where its instruction receiver 16b is active and able to receive an instruction signal. The instruction receiver 20b may then receive an instruction signal sent by the instruction transmitter 34 of the access decision point 30. The second access enforcement point 10b may then cause operation of the second access point 20b according to the instruction signal.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 10a/10b: first/second access enforcement point
- 12a/12b: wakeup receiver
- 14a/14b: wakeup transmitter
- 16a/16b: instruction receiver
- 20a/20b: first/second access point
- 30: access decision point
- 110: Receiving a first wakeup signal
- 130: Determining designation of first wakeup signal
- 150: Sending a second wakeup signal
- 170: Switching the first access enforcement point into the active mode
- 180: Receiving an instruction signal
- 190: Causing operation of the first access point
- 210: Receiving the second wakeup signal
- 230: Determining designation of second wakeup signal
- 250: Sending a third wakeup signal
- 270: Switching the second access enforcement point into the active mode
- 280: Receiving an instruction signal
- 290: Causing operation of the second access point
- 401-404: User
- 401a-404a: User device

## Claims

1. A computer-implemented wakeup-signal forwarding method for access control, the method being performed at least by a first access enforcement point (10a) being operable in a low-power mode and in an active mode, the first access enforcement point (10a) being configured to cause operation of a first access point (20a),
wherein the first access enforcement point (10a) being in the low-power mode is configured to operate at a lower power consumption as compared to a power consumption of the first access enforcement point (10a) being in the active mode,
wherein the first access enforcement point (10a) comprises a wakeup receiver (12a) configured to receive a wakeup signal, a wakeup transmitter (14a) configured to send a wakeup signal, and an instruction receiver (16a) configured to receive an instruction signal,
wherein in the low-power mode of the first access enforcement point (10a), the instruction receiver (16a) is inactive, and wherein in the active mode of the first access enforcement point (10a), the instruction receiver is active (16a),
wherein the method comprises:
receiving (110), by the wakeup receiver (12a) of the first access enforcement point (10a) being in the low-power mode, a first wakeup signal, and determining (130) whether the first wakeup signal is designated to cause switching of the first access enforcement point (10a) into the active mode;
if the first wakeup signal is determined to not being designated to cause switching of the first access enforcement (10a) point into the active mode, sending (150), using the wakeup transmitter (14a), a second wakeup signal, the second wakeup signal preferably corresponding to the first wakeup signal.

2. The computer-implemented wakeup-signal forwarding method according to claim 1,
wherein the first wakeup signal includes designation information, preferably indicating a designation access enforcement point that is intended to be switched into the active mode, wherein determining (130) whether the first wakeup signal is designated to cause switching of the first access enforcement point (10a) into the active mode is performed based on the designation information,
preferably wherein the second wakeup signal also includes the designation information.

3. The computer-implemented wakeup-signal forwarding method according to any one of the preceding claims, wherein sending (150) the second wakeup signal is only performed under the condition that no other wakeup signal corresponding to the first wakeup signal was received by the wakeup receiver (12a) of the first access enforcement point (10a) within a time period before receiving (110) the first wakeup signal,
and/or wherein claim 3 depends on claim 2 and wherein sending (150) the second wakeup signal is only performed under the condition that no other wakeup signal including the same designation information as included in the first wakeup signal was received by the wakeup receiver (12a) of the first access enforcement point (10a) within a time period before receiving (110) the first wakeup signal.

4. The computer-implemented wakeup-signal forwarding method according to any one of the preceding claims, comprising:
if the first wakeup signal is determined (130) to be designated to cause switching of the first access enforcement point (10a) into the active mode, switching (170) the first access enforcement point (10a) from the low-power mode into the active mode,
wherein the method optionally further comprises:
receiving (180), by the active instruction receiver (16a) of the first access enforcement point (10a) being in the active mode, an instruction signal, preferably from an access decision point (30), and
causing (190) operation of the first access point (10a) according to the instruction signal.

5. The computer-implemented wakeup-signal forwarding method according to any one of the preceding claims, wherein the inactive instruction receiver (16a) of the first access enforcement point (10a) being in the low-power mode is not able to receive (180) an instruction signal, and wherein preferably, the first access enforcement point (10a) being in the low-power mode is not able to cause operation (190) of the first access point (20a).

6. The computer-implemented wakeup-signal forwarding method according to any one of the preceding claims, wherein the wakeup receiver (12a), preferably the wakeup receiver (12a) and the wakeup transmitter (14a), are configured to operate at a lower power consumption as compared to a power consumption of the active instruction receiver (16a) of the first access enforcement point (10a) being in the active mode,
wherein optionally, the sensitivity of the wakeup receiver (12a) is lower than the sensitivity of the active instruction receiver (16a).

7. The computer-implemented wakeup-signal forwarding method according to any one of the preceding claims, wherein the method is performed at least by the first access enforcement point (10a) and a second access enforcement point (10b), the second access enforcement point (10b) comprising a wakeup receiver (12b), a wakeup transmitter (14b) and an instruction receiver (16b), the second access enforcement point (10b) being configured to cause operation of a second access point (20b),
the method further comprising:
receiving (210), by the wakeup receiver (12b) of the second access enforcement point (10b) being in the low-power mode, the second wakeup signal, and determining (230) whether the second wakeup signal is designated to cause switching of the second access enforcement point (10b) into the active mode;
if the second wakeup signal is determined (230) to be designated to cause switching of the second access enforcement point (10b) into the active mode, switching (270) the second access enforcement point (10b) from the low-power mode into the active mode;
wherein the method optionally further comprises:
receiving (280), by the active instruction receiver (16b) of the second access enforcement point (10b) being in the active mode, an instruction signal, preferably from an access decision point (30), and causing operation (290) of the second access point (20b) according to the instruction signal.

8. The computer-implemented wakeup-signal forwarding method according to any one of the preceding claims,
wherein the first and/or the second access enforcement point comprise(s) an energy storage and preferably energy harvesting means, the energy harvesting means optionally including a solar cell.

9. The computer-implemented wakeup-signal forwarding method according to any one of the preceding claims, wherein the method is performed by the first access enforcement point (10a) and an access decision point (30), optionally by the first access enforcement point (10a) and the access decision point (30) and a second access enforcement point (10b),
wherein the access decision point (30) comprises a transmitter arrangement,
wherein the method further comprises:
sending, by the transmitter arrangement of the access decision point, the first wakeup signal, and
wherein preferably, claim 9 depends on claim 4 or claim 7 and the method further comprises sending, by the transmitter arrangement of the access decision point, the instruction signal.

10. The computer-implemented wakeup-signal forwarding method according to any one of the preceding claims, wherein the first access enforcement point (10a) and/or the second access enforcement point (10b) and/or the access decision point (30) is respectively configured to send and/or receive signals wirelessly.

11. An access control system, comprising an access decision point (30), a first access enforcement point (10a) and a first access point (20a), the first access enforcement point (10a) being operable in a low-power mode and in an active mode and the first access enforcement point (10a) being configured to cause operation of the first access point (20a),
wherein the access decision point (30) comprises a transmitter arrangement configured to send a wakeup signal and an instruction signal,
wherein the first access enforcement point (10a) being in the low-power mode is configured to operate at a lower power consumption as compared to a power consumption of the first access enforcement point (10a) being in the active mode,
wherein the first access enforcement point (10a) comprise a wakeup receiver (12a) configured to receive a wakeup signal, a wakeup transmitter (14a) configured to send a wakeup signal, and an instruction receiver (16a) configured to receive an instruction signal,
wherein in the low-power mode of the first access enforcement point, the instruction receiver (16a) is inactive, and wherein in the active mode of the first access enforcement point, the instruction receiver (16a) is active,
wherein the first access enforcement point (10a) is configured to receive, by the wakeup receiver (12a) and being in the low-power mode, a first wakeup signal, and to determine whether the first wakeup signal is designated to cause switching of the first access enforcement point (10a) into the active mode,
wherein the first access enforcement point (10a) is configured to send, using the wakeup transmitter (14a), a second wakeup signal if the first wakeup signal is determined to not being designated to cause switching of the first access enforcement point into the active mode, the second wakeup signal preferably corresponding to the first wakeup signal,
wherein more preferably, the access control system is configured to be used in a computer-implemented wakeup-signal forwarding method according to any of claims 1 to 10.

12. The access control system according to claim 11, wherein the wakeup receiver (12a) of the first access enforcement point (10a), preferably the wakeup receiver (12a) and the wakeup transmitter (14a), are configured to operate at a lower power consumption as compared to a power consumption of the active instruction receiver (16a) of the first access enforcement point (10a) being in the active mode.

13. An access enforcement point (10a) being operable in a low-power mode and in an active mode and being configured to cause operation of an access point (20a),
wherein the access enforcement point (10a) being in the low-power mode is configured to operate at a lower power consumption as compared to a power consumption of the access enforcement point (10a) being in the active mode,
wherein the access enforcement point (10a) comprises a wakeup receiver (12a) configured to receive a wakeup signal, a wakeup transmitter (14a) configured to send a wakeup signal, and an instruction receiver (16a) configured to receive an instruction signal,
wherein in the low-power mode of the access enforcement point (10a), the instruction receiver (16a) is inactive, and wherein in the active mode of the access enforcement point (10a), the instruction receiver (16a) is active,
wherein the access enforcement point (10a) is configured to receive, by the wakeup receiver (12a) and being in the low-power mode, a first wakeup signal, and to determine whether the first wakeup signal is designated to cause switching of the access enforcement point (10a),
wherein the access enforcement point (10a) is configured to send, using the wakeup transmitter (14a), a second wakeup signal if the first wakeup signal is determined to not being designated to cause switching of the access enforcement point (10a) into the active mode, the second wakeup signal preferably corresponding to the first wakeup signal,
wherein more preferably, the access enforcement point (10a) is configured to be used in a computer-implemented wakeup-signal forwarding method according to any of claims 1 to 10.

14. Use of an access enforcement point (10a) according to claim 13 in a computer-implemented wakeup-signal forwarding method according to any of claims 1 to 10.

15. A computer program comprising computer-readable instructions which when executed by a data processing apparatus cause the data processing apparatus to perform the computer-implemented method according to any of claims 1 to 10.
